# EUROPÄISCHE PATENTSCHRIFT

(11) **EP 0 498 289 B1**
(45) Veröffentlichungstag und Bekanntmachung des Hinweises auf die Patenterteilung: **09.08.1995**
(21) Anmeldenummer: 92101451.0
(22) Anmeldetag: 29.01.1992
(51) Int. Cl.: C10J 3/00, C10J 3/08, C10J 3/46, F01K 23/06

(54) **Verfahren zur Trocknung von Kohle für Einschmelz- bzw. Kohlevergaser**
Process for drying of coal for fusion or coal gazifier
Procédé pour le séchage de charbon pour gazéificateur à fusion ou à charbon

(30) Priorität: 05.02.1991 DE 4103362
(43) Veröffentlichungstag der Anmeldung: 12.08.1992
(73) Patentinhaber: DEUTSCHE VOEST-ALPINE INDUSTRIEANLAGENBAU GMBH, 40094 Düsseldorf (DE); VOEST-ALPINE INDUSTRIEANLAGENBAU GESELLSCHAFT m.b.H., A-4020 Linz (AT)
(72) Erfinder: Hauk, Rolf, Dr., W-7590 Achern (DE)
(74) Vertreter: Pfenning, Meinig & Partner

(56) Entgegenhaltungen:
- EP-A- 0 092 856
- EP-A- 0 190 094
- EP-A- 0 215 330
- WO-A-81/02303
- DD-A- 280 374
- DE-A- 2 345 396
- DE-A- 2 429 993
- US-A- 4 414 813
- PATENT ABSTRACTS OF JAPAN vol. 11, no. 242 (C-438)7. August 1987
- PATENT ABSTRACTS OF JAPAN vol. 12, no. 37 (C-437)4. Februar 1988
- BRENNSTOFF WÄRME KRAFT Bd. 41, Nr. 9, September 1989, DÜSSELDORF Seiten 413 - 423; KELLER: 'DER GUD-PROZESS'
- TECHN. MITT. KRUPP WERKSBERICHTE Bd. 43, Nr. 1, Mai 1985, ESSEN Seiten 9 - 15; STAEGE: 'ENERGIE-UND KOSTENSENKUNG IN KOHLE-SYNTHESEGASTECHNOLOGIEN DURCH GAS- U. DAMPFTURBINEN-KRAFTWERKE'

## Beschreibung

Die Erfindung betrifft ein Verfahren zur Trocknung von Kohle mit natürlichem Feuchtigkeitsgehalt, die Einschmelz- bzw. Kohlevergasern zugeführt wird, bei dem die Trockung mittels bei einer Kopplung mit einem Gasturbinen-Kraftwerk anfallender Überschußenergie vorgenonmen wird.

Es ist bekannt, daß Kohle zur Vergasung in Einschmelz- oder Kohlevergasern zur Verbesserung des Wirkungsgrades von einem durchschnittlichen Feuchtegehalt (ca. 15 %) getrocknet werden muß. Es treten ohne Trocknung Behinderungen des Kohletransportes und durch die endotherme Wirkung des Feuchtigkeitsgehalts eine Beeinträchtigung der Zusammensetzung des erzeugten Gases auf (DE 1 017 314, DE 3 537 758). Der Anteil brennbarer Bestandteile im erzeugten Gas kann, ohne Trocknung der zu vergasenden Kohle, nur durch eine Erhöhung der in den Vergaser einzublasenden Sauerstoffmenge vergrößert werden.

In AT-PS 380 697 wird vorgeschlagen, Kohle mit abgezogenem Gichtgas vorzuwärmen. Dabei entsteht ein erhöhter Aufwand für den Bau einer solchen Anlage, da zusätzliche Einflüsse beim Betrieb des Einschmelzvergasers berücksichtigt werden müssen. Außerdem wird ein Teil der Energie des Gichtgases für die Trocknung der Kohle verbraucht und somit verringert sich der Wirkungsgrad der Anlage.

In DE 2 920 922 werden ein Verfahren und eine Vorrichtung zur Vergasung von Kohle beschrieben, mit denen folgende Aufgabe gelöst werden soll:
- zuverlässig und mit erhöhter Wirtschaftlichkeit, insbesondere besserer Wärmeausnützung der flüssigen Schlacke, bei geringer Umweltbelastung Kohle zu vergasen.

Es wird dabei die fühlbare Wärme der flüssigen Schlacke genutzt und Wasserdampf erzeugt. Dieser Wasserdampf wird z.T. als Vergasungsmittel zugeführt und je ein Teilstrom zur Trocknung der Kohle und Erzeugung mechanischer Energie verwendet. Damit jedoch keine umweltbelastenden Abwässer entstehen, ist ein erhöhter Aufwand für die Reinigung des einzusetzenden Wassers erforderlich, und es muß zusätzlich Wasser zugegeben werden.

Weiterhin ist ein Verfahren zur Erzeugung von brennbaren Gasen in einem Einschmelzvergaser DE 4 004 938 bekannt. Das brennbare Gas wird in einem Gasturbinen-Dampfkraftwerk zur Erzeugung von Elektroenergie und Wärme in Form von Wasserdampf benutzt. In diesem Fall gehören zum ökonomischen, umweltfreundlichen und sicheren Betrieb der Gesamtanlage ein zusätzlicher Luftzerleger zur Erzeugung von Sauerstoff, reinem Stickstoff und einem Anteil von Gas mit hohem Stickstoffanteil, ein Entschwefelungsreaktor sowie diverse Wärmetauscher, Verdichter und zusätzliche Steuer- und Regeleinrichtungen. Auch in diesem Fall kann die Trocknung von Kohle nur entweder durch Verbrennung von erzeugtem Gas oder andere dere Brennstoffe erfolgen, was sich wirkungsgradverschlechternd auswirkt.

Die EP 0 215 330 beschreibt ein kombiniertes Gas- und Dampfturbinenkraftwerk bei dem Kohle in einer Mahl-Trocknungsanlage mit einem Gemisch von Stickstoff und Wasserdampf getrocknet wird.

Das in DD 280 374 vorgestellte Verfahren und die Einrichtung zur Kohlenstauberzeugung weist ebenfalls auf die Verwendung eines inertisierten Gasgemisches, das aus Abgasen einer Gasverbrennung, aus Gasturbinenabgas, Stickstoff und aufgeheiztem Brüdenanteil zusammengesetzt ist, in einem Wirbelschicht-Kohletrockner hin.

Aufgabe der Erfindung ist es daher, Kohle zu trocknen, die in einem Einschmelz- bzw. Kohlevergaser vergast wird, um u.a. brennbares Gas für die Elektro- und Wärmeenergiegewinnung in einem Gas- und Dampfturbinen-Kraftwerk zu erhalten, indem im Prozeß bisher ungenutzte Energie effektiver eingesetzt und keine zusätzliche Umweltbelastung zugelassen wird.

Erfindungsgemäß wird diese Aufgabe durch die im Anspruch 1 angegebenen Merkmale gelöst. Die zu vergasende Kohle wird mittels stickstoffhaltiger Gase, unter Nutzung von Überschußenergie, in einem Trockner getrocknet. Hierfür sichert die durch Wärmeaustausch mit einem Fluid aus einem Hilfsaggregat entnommene Überschußenergie die Elektro- und Wärmeenergiegewinnung und verbessert die Energiebilanz.

Die Überschußenergie zur Erwärmung des Fluids kann der durch Verdichtung erwärmten Luft einer Luftzerlegungsanlage, die den für den Betrieb des Vergasers erforderlichen Sauerstoff und Stickstoff bereitstellt, entnommen werden. Eine andere Möglichkeit bietet die Nutzung der Wärme der heißen abgezogenen Gase im Wärmeaustausch mit dem Fluid aus einem Entschwefelungsreaktor, des abgezogenen heißen Gases des Vergasers bzw. Einschmelzvergasers oder des Topgases eines Reduktionsschachtofens. Außerdem stehen die Wärme der aus der Gasturbine austretenden Rauchgase und die Wärme des im Kühlkreislauf des Kraftwerks befindlichen Wassers zur Verfügung.

Als Fluid für den Wärmeenergietransport zum Trockner kommt neben heißes Wasser und Dampf auch Luft in Frage.

Bei Verwendung von heißem Wasser sollte dieses günstigerweise soweit komprimiert sein, daß seine Verdampfungstemperatur nicht erreicht wird und es in flüssiger Phase zur Verfügung steht. Dadurch wird eine größere Energiedichte, geringerer Verschleiß und Druckverlust im Leitungssystem gesichert.

In vorteilhafter Weise kann die Kohle mit Stickstoff getrocknet werden. Dadurch können höhere Trocknungstemperaturen realisiert werden und der Trocknungsprozeß verkürzt sich. Bei Stickstoff mit einem geringen Restanteil an Sauerstoff ist eine Reaktion der Kohle fast vollständig ausgeschlossen. Außerdem steht der Stickstoff durch die für den Betrieb des Vergasers erforderliche Luftzerlegungsanlage in ausreichender Qualität und Quantität zur Verfügung. Die Menge des Stickstoffs ist so groß, daß sich eine weitere Möglichkeit zur Energieerzeugung bietet. Nach der Erwärmung kann ein Teilstrom abgezeigt werden, der nicht zur Kohletrocknung verwendet wird, sondern in einer Expansionsturbine auf Atmosphärendruck entspannt wird.

Nachfolgend soll die Erfindung anhand von Ausführungsbeispielen näher erläutert werden.

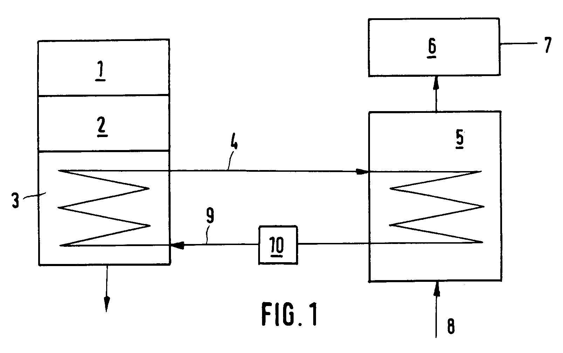

- Fig. 1: zeigt die Nutzung der Überschußenergie des Abhitzesystems eines Gas- und Dampfturbinen-Kraftwerks zur Trocknung von zu vergasender Kohle;

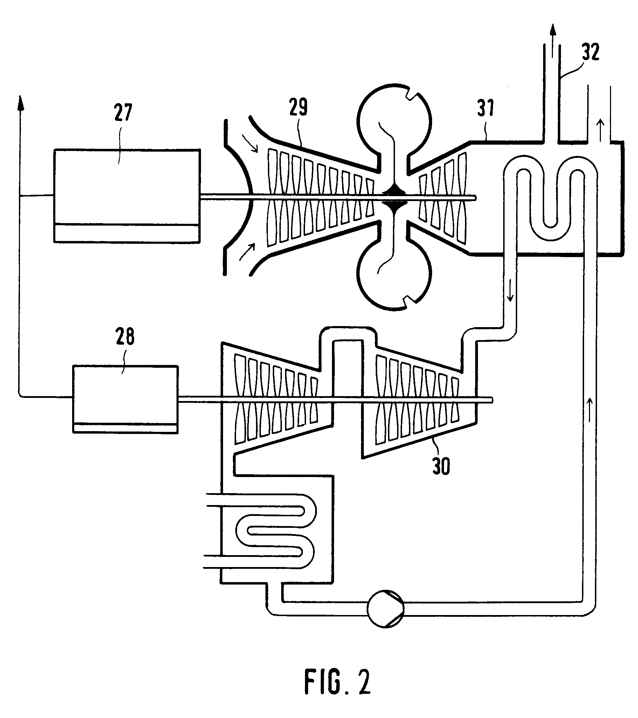

- Fig. 2: zeigt eineRauchgasauskopplung aus einem Gas- und Dampfturbinenkraftwerk und
Anhand der schematischen Darstellung gemäß Fig. 1 ist ersichtlich, wie die Überschußenergie eines Gas-und Dampfturbinen-Kraftwerks, die durch Dampferzeugung und die heißen Rauchgase zur Verfügung steht, zur Kohletrocknung genutzt werden kann.

Die heißen Rauchgase, die die Gasturbine 1 mit einer Temperatur von ca. 520°C verlassen, durchströmen zunächst einen Wärmetauscher 2, in dem Dampf für die Gasturbine erzeugt wird. Danach durchströmen die Rauchgase den Wärmetauscher 3, in dem Wärme an das Fluid, heißes Wasser, abgegeben wird und dieses auf etwa 250°C erwärmt. Das heiße Wasser gelangt durch die Leitung 4 zum Wärmetauscher 5 und gibt dort seine Wärme an durch den Wärmetauscher 5 strömende Luft ab.

Für die Trocknung von 80 t/h Kohle mit einer Feuchte von 10 %, die auf 5 % verringert werden soll, werden bei einer Ausgangstemperatur von ca. 20 °C 90 000 m³/h Luft benötigt. Die Eintrittstemperatur des heißen Wassers in den Wärmetauscher an dessen Eingang 8 muß dann ca. 220 °C betragen, um eine Trocknungslufttemperatur von 200 °C im Trockner 6 zu sichern. Bei der Trocknung verringert sich die Temperatur der Luft auf ca. 70 °C. Die Luft verläßt den Trockner durch den Abzug 7.

Das heiße Wasser strömt aus dem Wärmetauscher 5 durch die Leitung 9 zurück in den Wärmetauscher 3. Durch die Pumpe 10 wird der Druck des heißen Wassers auf über 40 bar erhöht, um eine Verdampfung zu verhindern. Dieser hohe Druck sichert, daß das heiße Wasser nicht verdampft, und dadurch sind infolge höherer Energiedichte kleinere Leitungsquerschnitte möglich und der Verschleiß in den Leitungen und im Wärmetauscher bleibt begrenzt.

Eine Möglichkeit der Rauchgasauskopplung aus einem Gas- und Dampfturbinenkraftwerk, mit dem diese Form Überschußenergie zur Kohletrocknung genutzt werden kann, ist in Figur 3 dargestellt. Ein herkömmliches Gas- und Dampfturbinenkraftwerk, das mittels zweier Generatoren 27, 28 die elektrische Energie abgeben und die durch eine Gasturbine 29 und eine Dampfturbine 30 angetrieben werden, ermöglicht eine Rauchgasauskopplung aus dem Abhitzedampferzeuger 31, in dem die Rauchgasenergie der Gasturbine 29 zur Dampferzeugung für den Betrieb der Dampfturbine 30 genutzt wird. Das ca.230°C heiße Rauchgas verläßt den Abhitzedampferzeuger 31 durch die Leitung 32 und kann direkt oder über Wärmeaustausch an ein anderes Fluid in einem nicht dargestellten Wärmetauscher zur Trocknung der Kohle verwendet werden.

## Patentansprüche

1. Verfahren zur Trocknung von Kohle mit natürlichem Feuchtigkeitsgehalt, die Einschmelz- bzw. Kohlevergasern zugeführt wird, bei dem
- die Trocknung mittels der bei einer Kopplung mit einem Gas-Dampfturbinen-Kraftwerk anfallenden Überschußenergie vorgenommen wird,
- die Überschußenergie über ein Fluid mit mindestens einem Trockner durch Wärmeauskopplung aus mindestens einem die eigentliche Energieerzeugung sichernden bzw. verbessernden Hilfsaggregat entnommen wird und
- als Fluid heißes Wasser in flüssiger Phase, das mit einem Druck oberhalb des Verdampfungsdruckes beaufschlagt ist, verwendet wird.

2. Verfahren nach Anspruch 1, dadurch gekennzeichnet, daß die Überschußenergie einer Luftzerlegungsanlage entnommen wird.

3. Verfahren nach Anspruch 1, dadurch gekennzeichnet, daß die Überschußenergie einem Entschwefelungsreaktor entnommen wird.

4. Verfahren nach Anspruch 1, dadurch gekennzeichnet, daß die Überschußenergie aus dem erzeugten Gas des Kohle- bzw. Einschmelzvergasers oder aus dem Topgas eines Reduktionsofens entnommen wird.

5. Verfahren nach Anspruch 1, dadurch gekennzeichnet, daß die Überschußenergie an einem Kompressor, der zum Betrieb einer Gasturbine dient, entnommen wird.

6. Verfahren nach Anspruch 1, 3 und 5, dadurch gekennzeichnet, daß die Überschußenergie dem der Gasturbine zugeführten brennbaren Gas in einem Kühler entnommen wird.

7. Verfahren nach Anspruch 1, dadurch gekennzeichnet, daß die Überschußenergie dem Kühlkreislauf des Gas- und Dampfturbinen- Kraftwerks entnommen wird.

8. Verfahren nach Anspruch 1, dadurch gekennzeichnet, daß die Überschußenergie den heißen Rauchgasen einer Gasturbine entnommen wird.

9. Verfahren nach Anspruch 1 bis 8, dadurch gekennzeichnet, daß die Kohle in einem Schwingtrockner getrocknet wird.

10. Verfahren nach Anspruch 1 bis 8, dadurch gekennzeichnet, daß die Kohle in einem Trommeltrockner getrocknet wird.

## Claims

1. A process for drying coal of natural moisture content for delivery into fusion or coal gazifiers, where
- drying is carried out by means of surplus energy which develops in a gas-steam turbine power station;
- the surplus energy is removed via a fluid with at least one dryer by separating heat from at least one auxiliary element which secures or improves the actual generation of energy; and
- the used fluid is hot water in a liquid phase which is charged with a pressure above vapourizing pressure.

2. A process according to claim 1, **characterized in that** the surplus energy is taken from an air-separation unit.

3. A process according to claim 1**, characterized in that** the surplus energy is taken from a desulphurization reactor.

4. A process according to claim 1, **characterized in that** the surplus energy is taken from gas produced by the coal or fusion gazifier or from the top gas of a reduction furnace.

5. A process according to claim 1, **characterized in that** the surplus energy is taken from a compressor which serves to operate a gas turbine.

6. A process according to claim 1, 3 and 5, **characterized in that** the surplus energy is taken in a cooler from the combustible gas which is fed to a gas turbine.

7. A process according to claim 1, **characterized in that** the surplus energy is taken from the cooling circulation of a gas and steam-turbine power plant.

8. A process according to claim 1, **characterized in that** the surplus energy is taken from the hot flu gases of a gas turbine.

9. A process according to claim 1 to 8, **characterized in that** the coal is dried in an undulating dryer.

10. A process according to claim 1 to 8, **characterized in that** the coal is dried in a drum dryer.

## Revendications

1. Procédé pour la dessiccation de charbon à l'état humide naturel, lequel est amené vers des gazéificateurs à fusion ou à charbon, selon lequel :
- la dessiccation s'effectue au moyen de l'énergie excédentaire produite lors du couplage à une centrale thermique à turbines à vapeur fonctionnant au gaz,
- l'énergie excédentaire est prélevée, par un fluide avec au moins un appareillage auxiliaire qui assure ou améliore la production d'énergie proprement dite, et
- le fluide utilisé étant de l'eau chaude en phase liquide qui est soumise à une pression supérieure à la pression d'évaporation.

2. Procédé selon la revendication 1, caractérisé en ce que l'énergie excédentaire est prélevée d'une colonne de séparation d'air.

3. Procédé selon la revendication 1, caractérisé en ce que l'énergie excédentaire est prélevée d'un réacteur de désulfurisation.

4. Procédé selon la revendication 1, caractérisé en ce que l'énergie excédentaire est prélevée du gaz produit par le gazeificateur à charbon ou à fusion ou du gaz de tête d'un four à réduction.

5. Procédé selon la revendication 1, caractérisé en ce que l'énergie excédentaire est prélevée d'un compresseur qui sert au fonctionnement d'une turbine à gaz.

6. Procédé selon les revendications 1, 3 et 5, caractérisé en ce que l'énergie excédentaire est prélevée dans un réfrigérant du gaz combustible amené à la turbine à gaz.

7. Procédé selon la revendication 1, caractérisé en ce que l'énergie excédentaire est prélevée du circuit de réfrigération de la centrale thermique à turbines à vapeur et à gaz.

8. Procédé selon la revendication 1, caractérisé en ce que l'énergie excédentaire est prélevée des gaz de fumée chauds d'une turbine à gaz.

9. Procédé selon les revendications 1 à 8, caractérisé en ce que le charbon est séché dans un dessiccateur vibrant.

10. Procédé selon les revendications 1 à 8, caractérisé en ce que le charbon est séché dans un dessiccateur à tambour.
